# EUROPÄISCHE PATENTSCHRIFT

(11) **EP 0 726 866 B1**
(45) Veröffentlichungstag und Bekanntmachung des Hinweises auf die Patenterteilung: **16.07.1997**
(21) Anmeldenummer: 95900077.9
(22) Anmeldetag: 02.11.1994
(51) Int. Cl.: B65D 88/12

(54) **GROSSRAUMTRANSPORTBEHÄLTER**
LARGE-CAPACITY TRANSPORT CONTAINER
CONTENEUR DE TRANSPORT DE GRANDE CAPACITE

(30) Priorität: 02.11.1993 DE 4338158; 30.05.1994 DE 4419394
(43) Veröffentlichungstag der Anmeldung: 21.08.1996
(73) Patentinhaber: CTS EUROCONtainer und Transportvermittlungs GmbH, 10367 Berlin (DE)
(72) Erfinder: HEGER, Siegfried, D-10565 Berlin (DE); KORBMACHER, Thomas, D-12209 Berlin (DE)
(74) Vertreter: Radwer, Dieter
(86) Internationale Anmeldenummer: DE9401338
(87) Internationale Veröffentlichungsnummer: WO9512536

(56) Entgegenhaltungen:
- WO-A-87/05887
- FR-A- 2 192 013
- FR-A- 2 632 927
- GB-A- 1 093 195
- US-A- 4 151 925

## Beschreibung

Die Erfindung betrifft einen Großraumtransportbehälter in Form eines stapelbaren ISO-Normcontainers zum Transport von Schuttgütern, wie beispielsweise fließfähige Baustoffe, Bauschutt, Müll, Industrieabfälle und dergleichen.

Die Vielfalt der anstehenden Transportaufgaben hat zu verschiedenen, parallel nebeneinanderliegenden Systemen zum Transport von Gütern geführt. In Abhängigkeit von der Entfernung der Bestimmungsorte für das zu transportierende Gut werden für den Schiffs- und Bahntransport genormte ISO-Container eingesetzt, während für den Straßentransport im Kurz- und Mittelstreckenbereich Wechselpritschen, Haken-Abrollcontainer oder andere Systeme zum Einsatz gelangen. Beide auf den Einsatz von Großraumtransportbehälter abgestellten Transportsysteme sind nicht miteinander kompatibel.

Der ISO-Container, der eine weltweite Verbreitung gefunden hat, besitzt auf Grund seines genormten konstruktiven Aufbaus eine hohe Stapelfähigkeit und ermöglicht eine weitreichende, kostengünstige Rationalisierung der gesamten Umschlagsprozesse. Das Aufnehmen und Absetzen der ISO-Container ist nur mit Hilfe spezifischer Hebezeuge möglich, über die die jeweiligen Umschlagplätze auf Bahnhöfen und in Häfen verfügen, wobei zum Anschlagen von Verladehilfsmitteln und zur Verankerung während des Transportes gesondert ausgebildete, sogenannte ISO-Ecken, in den Bauvorschriften festgelegt sind. Im Kurzstreckenbetrieb erfolgt der Containertransport mit Lastkraftwagen, die mit gesonderten Pritschen ausgestattet sind. Das Be- und Entladen der Lastkraftwagen erfolgt in der Regel mit den auf den Umschlagplätzen vorhandenen Hebezeugen oder kann nur mit teuren und schweren Selbstladeeinrichtungen oder anderen zusätzlichen Ladehilfsmitteln durchgeführt werden. Die spezifischen Bedingungen für das Aufnehmen und Absetzen der ISO-Container und die exakt vorgegebenen Normen für seinen konstruktiven Aufbau dürften zu den Gründen gehören, daß diese Großraumtransportbehälter trotz ihrer logistischen Vorteile nur für den Fernstreckentransport und seltener im Kurz- und Mittelstreckenbetrieb eingesetzt werden. Für turnusmäßig oder täglich zu lösende Transportaufgaben, beispielsweise zur Belieferung oder zur Entsorgung von Baustellen, sind die ISO-Container auf Grund fehlender Hebezeuge oder gesonderter Hebevorrichtungen an den Transportfahrzeugen zu schwerfällig und damit wirtschaftlich ungeeignet.

Um die Mobilität von Großraumtransportbehältern im Kurz- und Mittelstreckenbetrieb zu erhöhen und das Auf- und Absetzen auf ein Transportfahrzeug zu erleichtern, wurden bereits zahlreiche Lösungen vorgeschlagen.

So sieht die DE 39 22 813 A1 ein Containerhilfsfahrwerk vor, das an einer der Stirnseiten des Containers angebracht wird, und mit Mitteln zum Eingriff in benachbarte untere ISO-Ecken ausgestattet ist. In der Verlängerung der Seitenlinie des Containers sind an das Containerhilfsfahrwerk Stützrollen in der Weise angelegt, daß der Container nach Anheben an der freien gegenüberliegenden Stirnseite auf den Rollen in horizontaler Richtung verfahren werden kann. Zur Aufnahme des Containers auf das Transportfahrzeug muß dieses mit einer gesonderten Aufnahmevorrichtung ausgerüstet werden. Das vorgeschlagene Hilfsfahrwerk kann ohne Umrüstung der Transportbehälter an jeden ISO-Container angebracht werden. Voraussetzung ist jedoch, daß dieses Hilfsfahrwerk am jeweiligen Einsatzort vorhanden ist oder auf dem Transportfahrzeug mit der spezifischen Aufnahmevorrichtung ständig mitgeführt wird.

Aus der DE 33 12 585 A1 ist ein Hilfsfahrwerk für einen Großraumtransportbehälter, bestehend aus einer hinteren Fahr- und einer vorderen Lenk- und Fahrachse bekannt, die auf einfache Weise schnell an den Rahmen des Transportbehälters an- und abgekuppelt werden können. Hierzu sind an den vorderen und hinteren Stirnseiten des Transportbehälters jeweils obere und untere Fangstücke angeordnet, in denen die vordere und hintere Achse eingesetzt und verbolzt werden. Zwischen den unteren Fangstücken und den Seitenstreben sind ferner hydraulische Arbeitszylinder eingesetzt, die bei Druckbeaufschlagung den Container anheben, um ihn dann vermittels des Hilfsfahrwerkes zu transportieren. Das Hilfsfahrwerk nach DE 33 12 585 A1 ist einerseits mit den vorstehend beschriebenen nachteiligen Eigenschaften behaftet, wobei für den Transport im Kurz- und Mittelstreckenbetrieb gesonderte Transportfahrzeuge mit den entsprechenden Containeraufnahmevorrichtungen eingesetzt werden müssen. Die Übertragung dieser Lösung auf ISO-Container erfordert zusätzliche konstruktive Veränderungen, da die genormten Abmessungen eines ISO-Containers durch das Anbringen von Fangstücken für das vordere und hintere Fahrwerk nicht überschritten werden dürfen, und bei beladenen Containern wesentlich höhere Gewichte vom Fahrwerk aufzunehmen sind.

Bekannt sind ferner zahlreiche Vorschläge - EP 0 502 833 A1 , DE 30 07 730 A1 , US 4 010 990, DE-GM 81 20 121 - um einen Großraumtransportbehälter oder einen ISO-Container mit Hilfe höhenverstellbarer Stützelemente von einem Transportfahrzeug abzusetzen und wieder aufzunehmen. Diese Systeme erfordern wiederum gesonderte Transportfahrzeuge und sind für ISO-Container nur dann anwendbar, wenn sie innerhalb der bestehenden Normabmessungen in den konstruktiven Aufbau eines ISO-Containers integriert werden können. Ein schnelles und einfaches Absetzen und Aufnehmen von Containern im Behälterverkehr zur Lösung von täglichen oder in kurzen Zeitabständen auftretenden Ver-oder Entsorgungsaufgaben ist mit diesen Hilfsmitteln nicht möglich.

Um das Aufnehmen und Absetzen eines Schüttgutcontainers mit einer gelenkig gelagerten und als Verschlußklappe ausgeführten Stirnwand auf ein mit einem Meilerhaken ausgerüsteten Transportfahrzeug zu erleichtern und die Manipulation mit diesem Schüttgutcontainer zu verbessern, sind gemäß der DE 37 44 712 A1 unterhalb des Containerbodens Stützrollen an teleskopisch ausziehbaren und schräg nach unten gerichteten Trägern angeordnet, die in der ausgezogenen Stellung festlegbar sind. Die teleskopisch ausziehbaren Träger sind dabei so angeordnet, daß die Stützrollen in der eingeschobenen Stellung innerhalb der Containernorm liegen. Der Einsatz dieser Stützrollenanordnung für ISO-Container erfordert einen Aufnahmebügel für den Meilerhaken, der in seiner Anordnung und Ausbildung sowohl den Normabmessungen für den ISO-Container als auch der Normhöhe zum Ansetzen des Meilerhakens entsprechen muß. Zudem ist die teleskopartige Ausbildung des Stützrollenträgers relativ aufwendig, erfordert einen größeren Bauraum und kann bei Beschädigungen an den ineinandergleitenden Trägerabschnitten zu Funktionsstörungen führen.

Der konstruktive Aufbau eines Haken-Abrollcontainers ist vorrangig auf die Bedingungen für den Transport von Schüttgütern mittels Lastkraftwagen im Kurz- und Mittelstreckenbetrieb ausgerichtet. Der Vorteil dieses Containertransportsystems ist die hohe Mobilität durch die uneingeschränkte Erreichbarkeit jedes Einsatzortes und das einfache und schnelle Absetzen und Aufnehmen der Abrollcontainer, unabhängig von Ort und Zeit und ohne zusätzliche technische Ausrüstungen mit Hilfe des am Transportfahrzeug vorhandenen Meilerhakens. Der Nachteil besteht vor allem darin, daß alle Abrollcontainer im beladenen Zustand nur bedingt stapelbar sind und bei Ferntransporten über größere Entfernungen der vorhandene Laderaum eines Eisenbahnwaggons oder eines Schiffes, da für diese andere Transportbehälternormen vorgesehen sind, auf Grund der konstruktiven Abmessungen nicht vollständig ausgenutzt wird. Um die Stapelbarkeit von insbesondere gefüllten Abrollcontainern zu verbessern, sind in der DE 31 13 083 A1 und 37 22 889 A1 Gleitelemente und teilweise verstellbar am Behälter angeordnete Rollen vorgesehen, die mit dem oberen Längsrand des im Stapel nächst tieferliegenden Behälters zusammenwirken. Eine durchgreifende Verbesserung der nur bedingten Stapelbarkeit der Abrollcontainer kann mit diesen Maßnahmen nicht erreicht werden. Zudem verbleibt immer noch der Nachteil, daß auf Grund der konstruktiven Ausbildung der Abrollcontainer der beispielsweise im Bahntransport vorhandene Laderaum nicht vollständig ausgenutzt werden kann.

Der Erfindung liegt daher die Aufgabe zugrunde, einen ISO-Normcontainer so auszurüsten, daß er als Abrollcontainer unter Verwendung der vorhandenen Transportfahrzeuge im Kurz- und Mittelstreckenbetrieb eingesetzt werden kann.

Erfindungsgemäß wird die Aufgabe durch die im Anspruch 1 aufgezeigten Merkmale gelöst. Weitere vorteilhafte Ausgestaltungen der Erfindung ergeben sich aus den Unteransprüchen 2 bis 23.

Durch die vorliegende Lösung wird mit relativ einfachen Mitteln die Kompatibilität zwischen dem im Fernbetrieb eingesetzten ISO-Container und dem Transportsystem für Abrollcontainer hergestellt. Die nach der Erfindung ausgerüsteten ISO-Container können mit Hilfe der Transportfahrzeuge für Haken-Abrollcontainer unmittelbar vor Ort abgesetzt oder aufgenommen und anschließend auf Grund der weiterhin gewährleisteten, uneingeschränkten Stapelbarkeit für Ferntransporte, beispielsweise mit der Bahn, unter vollständiger Ausnutzung des vorhandenen Transportraumes zu einer entfernt liegenden Aufbereitungs- oder Entsorgungsanlage eingesetzt werden.

Die vorliegende Erfindung ist sowohl für ISO-Container mit halben Höhen, als auch für solche mit unterschiedlichen Längen verwendbar.

Vorhandene ISO-Normcontainer lassen sich durch die vorgeschlagene Ausbildung und Anordnung des Aufnahmebügels für den Meilerhaken, der Stützrollen und der Gleitschienen nach Anspruch 6 bis 10 verhältnismäßig schnell und kostengünstig umrüsten, wobei durch das bloße Ein- und Ausschwenken des Aufnahmebügels und der Stützrollen und durch die einfache Lagesicherung mittels Steckbolzen eine hohe Funktionssicherheit und eine unkomplizierte Handhabung erreicht werden.

Durch die vorgeschlagene Anordnung und Ausbildung von Gabeltaschen nach den Ansprüchen 2 bis 5 können Haken-abrollcontainer und als Hakenabrollcontainer ausgebildete ISO-Normcontainer ohne Einschränkungen neben den bisher verwendeten Hebezeugen und Transportausrüstungen auch mit Gabelstaplern sicher bewegt und dadurch die Transport- und Umschlagprozesse mit Containern der genannten Gattung weiter kostenkünstig gestaltet werden.

Die in Kippwerkanordnung angebrachte Druckfeder entsprechen Anspruch 10 bis 13, die zwischen einem an den Stegblechen verdrehbar angeordneten Federlager und einem an der Stützrollenachse vorhandenen festen Federlager eingespannt ist, bewirkt, daß die Tragarme mit den Stützrollen immer in ihren Endstellungen gehalten werden.

Nach Überwindung des Kippunktes, der nach der Hälfte des Schwenkweges erreicht ist, unterstützt die Federkraft das Erreichen der Arbeitsstellung, wobei durch die Feder ein Teil der Massenkräfte der Tragarme und der Stützrolle kompensiert werden und von der Bedienperson nur ein verhältnismäßig geringer Kraftaufwand zum vollständigen Einschwenken der Stützrolle in die Arbeitsendstellung aufgebracht werden muß.

Durch kraftspeichernden Elemente, beispielsweise eine Gasdruckfeder, oder durch hydraulische Arbeits-und Druckzylinder, wie in den Ansprüchen 16 bis 23 vorgeschlagen, wird nach dem Entriegeln der die Stützrollen tragenden Tragarme von Hand ein mechanisch unterstütztes, nahezu selbsttätiges Aus- und Einschwenken der Stützrollen aus oder in die jeweilige Endstellung erreicht. Die hydraulischen Arbeitszylinder verriegeln gleichzeitig die Tragarme mit den Stützrollen in der jeweiligen Endstellung. Vermittels dieser Lösung kann der mechanischer Aufwand zur Unterstützung der Schwenkbewegungen weitgehend reduziert werden.

Die für den Transport des ISO-Containers auf ein Transportfahrzeug für Abrollcontainer vorgesehenen Mittel befinden sich in ihren Ruhe- oder Ausgangsstellungen sämtlich in den vorgegebenen Normabmessungen für ISO-Container, wodurch die logistischen Vorteile dieses Großraumtransportbehältersystems voll erhalten bleibt und der gesamte Transportbehälterverkehr weiter rationalisiert werden kann, da ohne eventuelle Umladeprozesse eine direkte logistische Verbindung zwischen den Bestimmungsorten gegeben ist.

Die Erfindung soll nachstehend an einem Ausführungsbeispiel näher erläutert werden. In den dazugehörigen Zeichnungen zeigen
- Fig. 1: die Seitenansicht des nach der Erfindung umgerüsteten ISO-Containers,
- Fig. 2: die Draufsicht von Fig. 1,
- Fig. 3: die Seitenansicht des vorderen Teiles des Containers nach Fig. 1,
- Fig. 4: die Vorderansicht des Containers mit dem in Arbeitsstellung befindlichen Aufnahmebügel für den Meilerhaken,
- Fig. 5: die Anordnung der Stützrollen in Ruhestellung,
- Fig. 6: die Anordnung der Stützrollen in Arbeitsstellung.
- Fig. 7: den Querschnitt A-A aus Fig. 2 durch den Container in Längsachse der Gabeltasche,
- Fig. 8: den Schnitt B-B aus Fig. 7,
- Fig. 9: den Schnitt C-C aus Fig. 7.
- Fig. 10: die Seitenansicht einer ersten Ausführungsform einer Schwenkeinrichtung für die Stützrollen
- Fig. 11: den Schnitt D - D aus Fig. 10
- Fig. 12: die schematische Darstellung der Anordnung von hydraulischen Arbeits- und Druckzylindern zum Verschwenken der Stützrollen
- Fig. 13: eine weitere Ausführungsform zum Verschwenken und Arretieren der Stützrollen mittels Luftfeder und Sperrstück
- Fig. 14: den Schnitt E - E aus Fig. 13

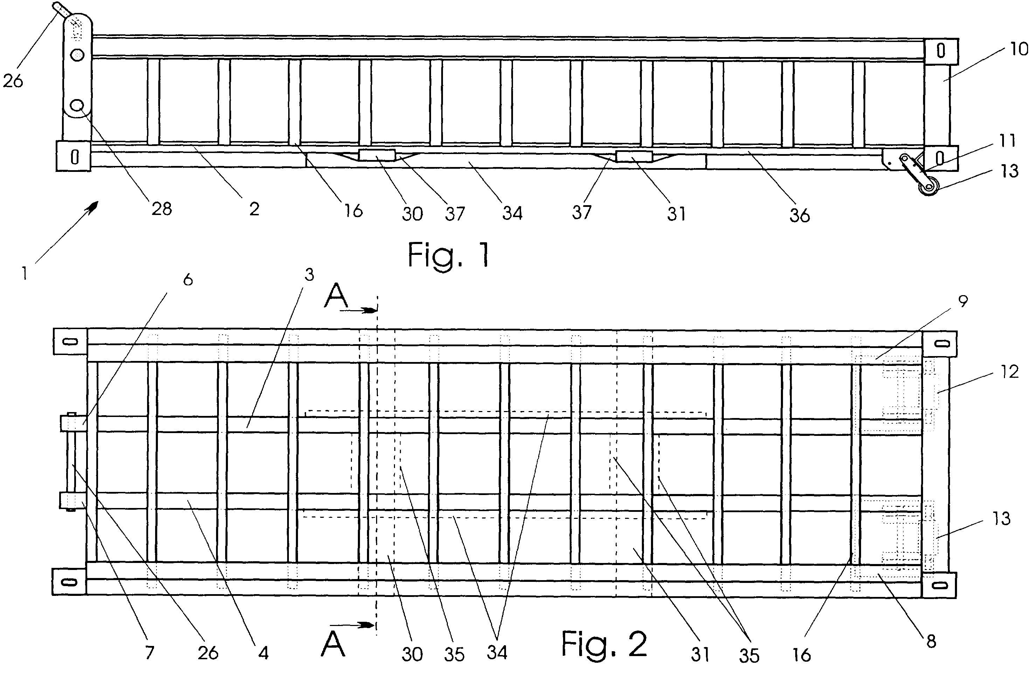

Der in Figur 1 und 2 schematisch dargestellte Container in Form eines stapelbaren, offenen ISO-Normcontainers 1 ist an seiner vorderen Stirnseite 5 mit einem höhenverstellbaren und ortsveränderlichen Aufnahmebügel 26 und an der gegenüberliegenden Stirnseite 10 in Eckbereichen 8;9 des Containerbodens 2 mit ein- und ausschwenkbaren Stützrollen 12;13 ausgestattet. Um den Container 1 auf den Führungsrollen oder auf eine Aufnahmevorrichtung eines Transportfahrzeuges für Abrollcontainer aufnehmen zu können, sind unter dem Containerboden 2 Gleitschienen 3;4 vorgesehen, die innerhalb der Containernorm für ISO-Container angeordnet und mit den Querspannten 16 des Containers 1 verschweißt sind. Die Gleitschienen 3;4 treten an der vorderen Stirnseite 5 aus dem Bereich des Containerbodens 2 heraus und sind mit den an der Stirnseite 5 ebenfalls innerhalb der Containernorm angebrachten Aufnahmeträgern 6;7 fest verbunden. Das aus den Aufnahmeträgern 6;7 und den Gleitschienen 3;4 bestehende Tragsystem gewährleistet ein verwindungssteifes Aufnehmen und Absetzen der ISO-Normcontainer auf ein mit einem Meilerhaken ausgestattetes Transportfahrzeug und eine rutschsichere Halterung des Containers 1 während des Straßentransportes.

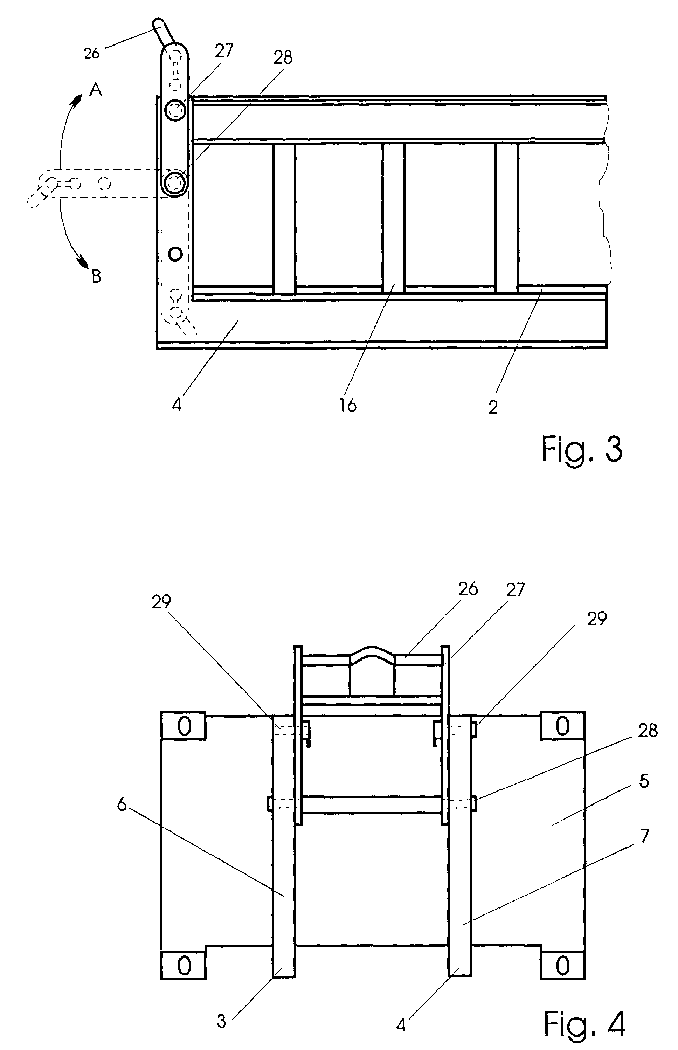

Der Aufnahmebügel für den Meilerhaken ist vorteilhafterweise in einer Traverse 27 angeordnet - Fig. 3 -, die zwischen den Aufnahmeträgern 6;7 durch Verschwenken um die Achse 28 ortsveränderlich angebracht ist. In seiner Ruhe- oder Ausgangsstellung befindet sich der Aufnahmebügel 26 in einer eingeschwenkten Position, die die Normabmessung des ISO-Containers nicht überschreitet und die durch Steckbolzen 29 gesichert wird. Der Aufnahmebügel 26 selbst ragt in dieser Stellung vorteilhafterweise in den Freiraum zwischen den Gleitschienen 3;4 hinein. Um den Container 1 mit Hilfe eines Meilerhakens aufnehmen und wieder absetzen zu können, wird der Aufnahmebügel 26 durch Verschwenken der Traverse 27 um die Achse 28 in seine obere Arbeitsstellung gebracht und in dieser Stellung wieder durch Steckbolzen 29 gesichert. Die Anordnung des Aufnamebügels 26 in eine Traverse 27 hat weiter den Vorteil, daß durch Ortsveränderung der Achse 28 entlang der Aufnahmeträger 6;7 die Höhe für den Zugriff des Meilerhakens verändert und entsprechend den jeweiligen Normen eingestellt werden kann.

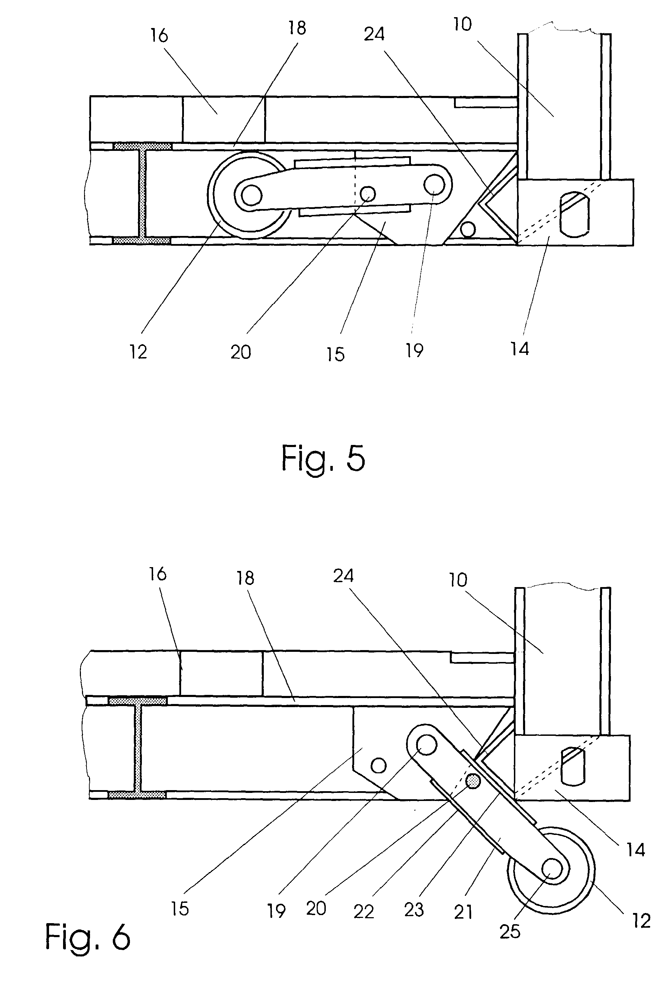

Für den Transport des Containers 1 während des Aufnahme- und Absetzvorganges sind in Eckbereichen 8;9 unter dem Containerboden 2 an Tragarmen 11 drehbar gelagerte Stützrollen 12;13 verschwenkbar angebracht, die in ihrer, gemäß einer ersten Ausführungsform, durch Steckbolzen 20 gesicherten Ausgangs- oder Ruhestellung - Fig. 5 - ebenfalls innerhalb der Containernorm positioniert sind und in ihrer Arbeitsstellung-Fig. 6 - die Containernorm überschreiten. Die Stützrollen 12;13 sind so angebracht, daß sie sich in einer verlängerten, senkrechten Ebene der Stirnwand 10 und in einer horizontalen Ebene unterhalb der ISO-Ecken 14 befinden. Die Tragarme 11 sind H-förmig ausgebildet und bestehen aus Laschen 21, die durch obere und untere Paßstücke 22;23 miteinander verbunden sind. Zwischen den freien Enden der Laschen 21 ist jeweils die Stützrolle 12;13 auf einer Achse 25 drehbar gelagert. Der aus den Laschen 21 und den Paßstücken 22;23 gebildete Tragarm 11 ist mittels Bolzen 19 an zwei Stegbleche 15 verschwenkbar angelenkt, die ihrerseits an einem Stützblech 18 angeschweißt sind. Das Stützblech 18 ist an einem Querspannt 16 des Containers 1 und an den Tragrahmen der Stirnwand 10 fest angebracht.

Der Tragarm 11, der in seiner ausgeschwenkten Arbeitsstellung wiederum durch einen Steckbolzen 20 fixiert ist, liegt mit seinem oberen Paßstück 23 spielfrei an einem Anschlagwinkel 24 an und gewährleistet so, daß die beim Auf- und Absetzen auftretenden relativ hohen Kräfte sicher auf die Tragkonstruktion des Containers 1 übertragen werden.

Diesem Zweck dienen nach einem weiteren Merkmal der Erfindung auch die im Anschlagwinkel 24 vorgesehenen Aussparungen 49 zur Aufnahme von Bolzen 57, die an den Tragarmen 11 angeordnet sind. Mit Hilfe der Bolzen 57 erfolgt eine zusätzliche Arretierung der Arbeitsstellung der Stützrollen 12;13. Gleichzeitig werden über die Bolzen 57 die beim Aufnehmen und Absetzen des Containers 1 auftretenden Axialkräfte sicher auf den festen Anschlagwinkel 24 übertragen und bei Entlastung der Stützrollenanordnung ebenfalls in den Containerrahmen eingeleitet.

Beim Umsetzen des im Kurz- oder Mittelstreckenbetrieb als Abrollcontainer eingesetzten ISO-Containers für den Ferntransport per Bahn oder Schiff, wird dieser von den auf den Umschlagplätzen vorhandenen Hebezeugen aufgenommen und anschließend die in Arbeitsstellung befindlichen und in dieser Anordnung die Containernorm überschreitenden Stützrollen 12;13 und der Aufnahmebügel 26 in die jeweilige Ausgangs- oder Ruhestellung zurückgeschwenkt und durch die Steckbolzen 20;29 gesichert. Der umgerüstete Container entspricht nunmehr wieder der ISO-Norm und kann auf bekannte Weise in den vorhandenen Transportraum eingestapelt werden. Beim Umsetzen des ISO-Containers aus einem Ferntransport in den Kurz- und Mittelstreckenbetrieb mittels Kraftfahrzeuge, erfolgt die Umrüstung in einen Haken-Abrollcontainer für den Straßenverkehr in der entgegengesetzten Weise.

Der als Hakenabrollcontainer ausgebildete ISO-Normcontainer 1 ist ferner mit Gabeltaschen 30;31 ausgerüstet, die symmetrisch zur Symmetrieachse der Containerlängswand angeordnet und entsprechend den im internationalen Transportwesen üblichen und festgelegten Abmessungen voneinander beabstandet sind. An die Stirnflächen der Gabeltaschen 30;31 schließen sich Führungs- und Versteifungsbleche 37 an, die mit dem Rahmenprofil 36 des ISO-Normcontainers 1 fest verschweißt sind. Obwohl diese Führungs- und Versteifungsbleche 37 für die Stabilität der Gabeltaschen 30;31 nicht zwingend erforderlich sind, vermeiden sie sicher eine Verschiebung der Gabeltaschen 30;31 bei einem seitlichen Lastangriff und dienen gleichzeitig als Führungshilfe beim Einsetzen der Transportgabel eines Gabelstaplers.

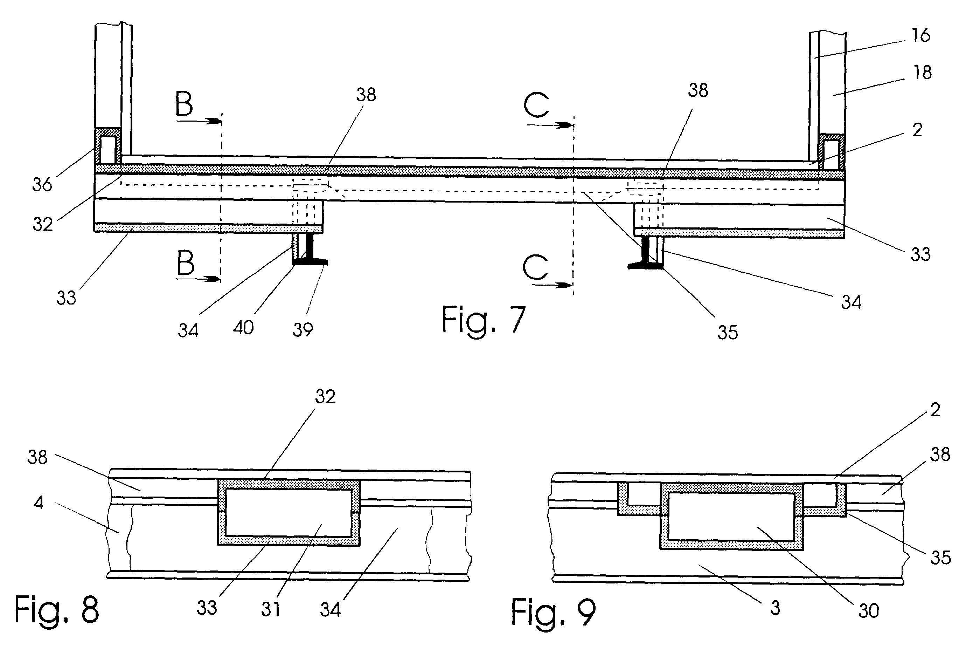

Die Gabeltaschen 30;31 - Fig. 7 bis 9 - bestehen aus einem u-förmigen Obergurt 32 und einem ebenfalls u-förmigen Untergurt 33, die in ihrer Symmetrieachse miteinander verschweißt sind.

Wie in Fig. 2 und 7 dargestellt, erstreckt sich der Obergurt 32, der mit dem Containerboden 2 verschweißt ist, über die gesamte Containerbreite und durchdringt an den betreffenden Stellen den Längsträger 38 und die an dem Längsträger 38 angebrachten Gleitschienen 3;4. Dadurch ist einerseits gewährleistet, daß zum Aufnehmen und Absetzen der Container die Transportgabel des Gabelstaplers vollständig und problemlos unter den Container 1 plaziert und für den Transport der Container 1 im Kurz- und Mittelstreckenverkehr die Transportmittel und -Ausrüstungen für Hakenabrollcontainer weiterhin genutzt werden können.

Andererseits führen die zur sicheren Plazierung der Transportgabel des Gabelstaplers zwingend notwendigen Durchbrüche in den Längsträgern 38 und den Gleitschienen 3;4 zwangsläufig zu einer erheblichen Verringerung der gesamten Stabilität des Containers 1. Um diesem Umstand abzuhelfen, sind zusätzliche Maßnahmen zu treffen, die jedoch das Aufnehmen, Absetzen und den Transport der Container mittels Gabelstapler und mit den Transportfahrzeugen für Hakenabrollcontainer in keiner Weise behindern dürfen. Überdies müssen diese Maßnahmen auch den Normabmessungen für ISO-Container entsprechen, um die volle Stapelbarkeit des als Hakenabrollcontainer ausgebildeten ISO-Normcontainers weiterhin zu sichern.

Zu diesem Zwecke sind gemäß der vorliegenden Erfindung zunächst zwischen den beiden Längsträgern 38 Versteifungen 35, vorzugsweise aus einem Winkelprofil, eingeschweißt. Diese Versteifungen 35 sind sowohl mit den Längsträgern 38 und den Gleitschienen 3;4 als auch mit den Längsseiten des Obergurtes 32 und mit dem Containerboden 2 fest verbunden - Fig. 7.

Auf den Außenseiten der Längsträger 38 und der Gleitschienen 3;4 - Fig. 1; 8 und 9 - sind ferner Stabilisierungsbleche 34 angeordnet, die den Bereich der Anordnung der Gabeltaschen 30;31 weiträumig überdecken und den Ober- und Untergurt 32;33 umschließend mit dem Längsträger 38 und dem Fuß 39 des Profils der Gleitschienen 3;4 verschweißt sind.

Der sich über die gesamte Breite des Containers 1 erstreckende Obergurt 32 führt zu einer wesentlichen Stabilisierung des Containerbodens 2 und nimmt zusammen mit den Versteifungen 35 bei gleichzeitiger Sicherung des notwendigen Freiraumes für die einzusetzende Verladetechnik mittels Gabelstabler und/oder Transportfahrzeuge für Hakenabrollcontainer die in diesem Bereich auftretenden Kräfte auf.

Die von außen nach innen bis zu den Gleitschienen 3;4 geführten Untergurte 33 steifen den Container 1 ebenfalls aus und dienen im Zusammenwirken mit den Stabilisierungsblechen 34 ebenfalls der Sicherung der gesamten Stabilität des Containers 1.

Um den manuellen Kraftaufwand zum Verschwenken der Stützrollenanordnung entscheidend zu senken, sind an den Stegblechen 15 kraftspeichernde Elemente in Kippwerkanordnung angebracht, die den Schwenkvorgang mechanisch unterstützen und zu einer Reduzierung des notwendigen Kraftaufwandes führen.

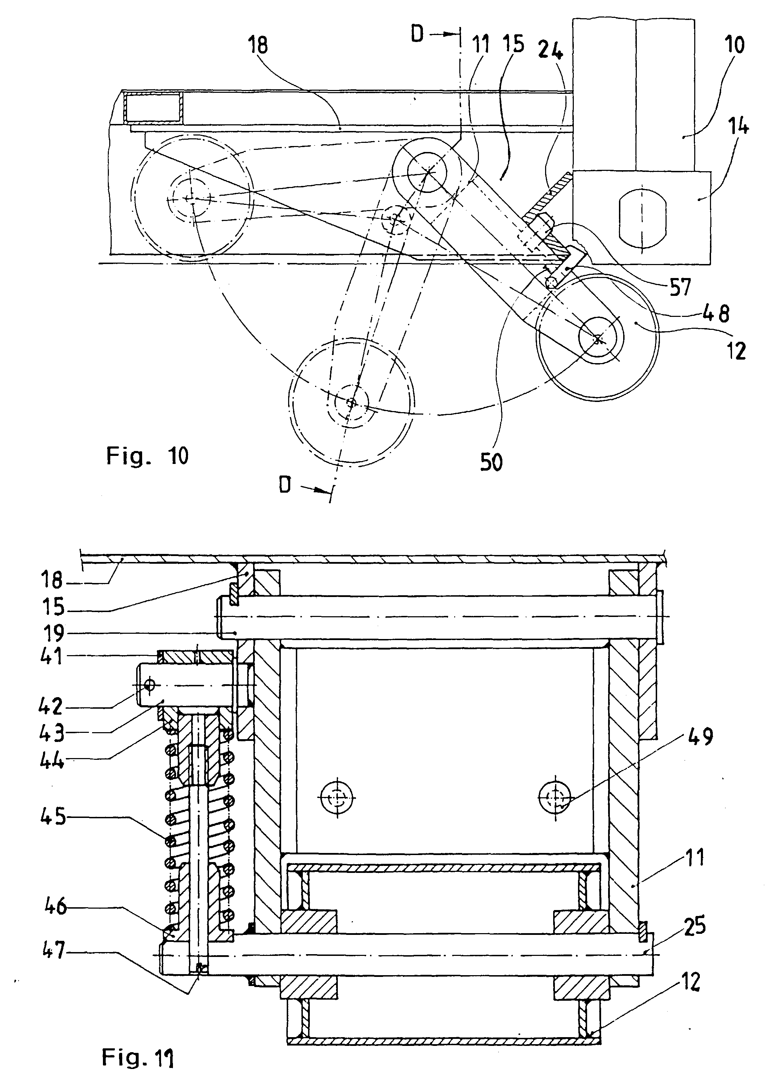

Wie aus Fig. 11 ersichtlich, ist an den Stegblechen 15 ein Bolzen 43 drehfest angebracht, auf dem ein verdrehbares Federlager 44, das durch eine vorgesteckte Scheibe 41 und durch einen Sicherungssplint 42 axial gesichert ist, angeordnet und über einen Zentrierstift 47, der in einem starren Federlager 46 auf der Stützrollenachse 25 geführt und in dem verdrehbaren Federlager 44 eingeschraubt ist, mit der Stützrollenachse 25 wirkverbunden. Zwischen den beiden Federlagern 44; 46 ist als kraftspeicherndes Element eine Druckfeder 45 unter Vorspannung eingespannt, die durch ihre Kippwerkanordnung den Ein- und Ausschwenkprozeß mechanisch unterstützt.

Die Wirkverbindung zwischen dem drehbaren Federlager 44 und dem starren Federlager 46 über den Zentrierstift 47 gewährleistet ferner, daß in jeder Phase der Schwenkbewegung das verdrehbare Federlager 44 zwangsweise mitgeführt wird.

Im Schwenkprozeß aus der Ruhestellung in die Arbeitsstellung und umgekehrt treten zwangsläufig Axialkräfte auf, die unter Umständen von der Druckfeder 45 aufgenommen werden und zu einer Reduzierung der verfügbaren Federkräfte führen können. Um diesem Nachteil zu begegnen, ist in dem verdrehbar ausgebildeten Federlager der Zentrierstift 47 eingeschraubt, der im starren Federlager 46 auf der Stützrollenachse 25 geführt wird und die Rollenachse 25 durchdringt. Die während des Schwenkprozesses auftretenden Axialkräfte werden von dem Zentrierstift 47 sicher aufgenommen und auf die Stützrolle 12;13 oder über die Tragarmanordnung auf den Containerrahmen übertragen. Die Federkraft der Druckfeder 45 steht somit uneingeschränkt zur Unterstützung der von Hand auszuführenden Schwenkbewegung zur Verfügung.

Neben der Federkraft der Druckfeder 45, die versucht, die Tragarme 11 mit den Stützrollen 12;13 in ihren Endstellungen zu halten, wird sowohl die Arbeitsstellung als auch die Ruhestellung durch eine Sperre 48 zusätzlich fixiert. Die Sperre 48 ist durch eine Feder 50 vorgespannt und hintergreift in der Arbeitsstellung den festen Anschlagwinkel 24. Die Sperre 48 sichert außerdem, daß bei einer Rückwärtsbewegung des Containers die in ihren Arbeitsstellungen befindlichen Rollen 12;13 nicht eingeschwenkt werden kann.

Die Federvorspannung der Sperre 48 ist so gewählt, daß sie zu Beginn des Schwenkprozesses von Hand leicht entriegelbar ist. Nach dem Entriegeln der Sperre 48 wird die Federkraft, die die Tragarme 11 mit den Stützrollen 12;13 in ihre Ruhestellung hält, durch die Massekräfte von Tragarm 11 und Stützrolle 12;13 teilweise kompensiert. Für den Ausschwenkprozeß ist dadurch eine wesentlich niedrigere, von Hand aufzubringende Kraft erforderlich.

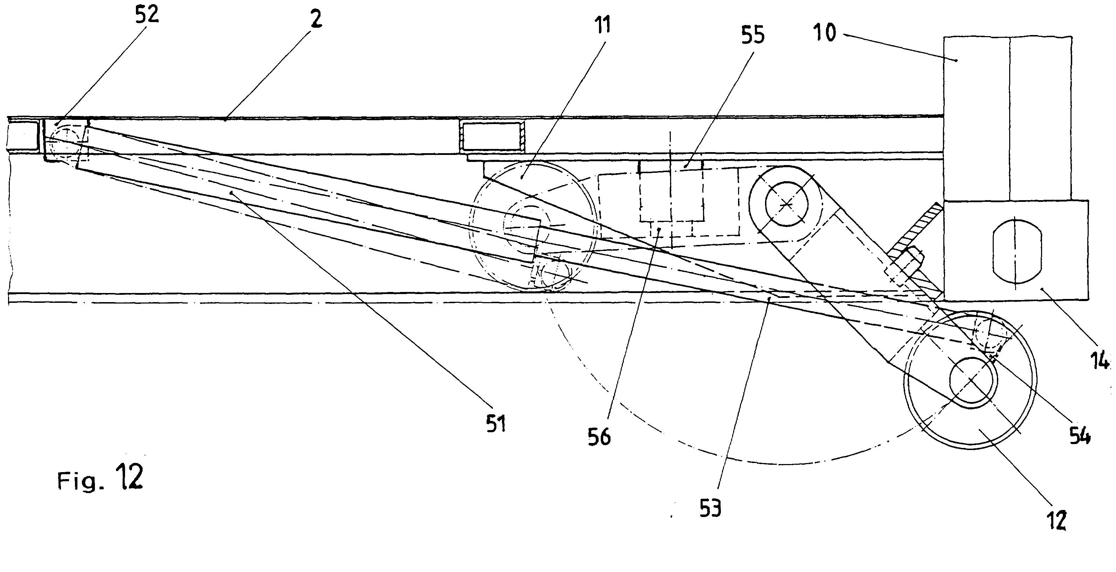

Eine weitere Ausführungsvariante ist in Fig. 12 dargestellt, die besonders vorteilhaft bei ISO-Norm-Container, die mit einer Hydraulikpumpe ausgerüstet sind, Anwendung findet.

Das Verschwenken der Stützrolle 12 aus ihrer Ruhestellung in die Arbeitsstellung und umgekehrt erfolgt mit Hilfe eines hydraulischen Arbeitszylinders 51;53, der auch gleichzeitig den Tragarm mit der Stützrolle 12 in der jeweiligen Endstellung verriegelt bzw. fixiert. Der Arbeitszylinder 51;53 ist über eine Aufnahme 52 am Containerboden 2 verschwenkbar angeordnet und durch einen Aufnahmeflansch 54 im Bereich der Stützrollenachse 25 drehbeweglich angelenkt.

Um gegebenenfalls auch größere Massekräfte zu überwinden, die beispielsweise am Anfang des Schwenkprozesses aus der Ruhestellung in die Arbeitsstellung auftreten können, ist am Containerboden 2 ein weiterer Druckzylinder 55 mit einer begrenzten Hubweite vorgesehen, dessen Druckkolben 56 am Steg des U-Profil der Tragarme 11 anliegt.

Durch eine entsprechende Dimensionierung der Arbeits-und Druckzylinder 51;55 besteht außerdem die Möglichkeit auch größere Massekräfte, beispielsweise die eines beladenen Containers, zu überwinden und den beladenen Container einseitig mit Hilfe der verschwenkbar angeordneten Stützrollen 12;13 anzuheben.

Beide hydraulische Zylinder 51 und 55 sind über Druckleitungen mit einer, vorzugsweise am ISO-Norm-Container vorhandenen, Handpumpe für eine Arbeitsflüssigkeit (nicht dargestellt) verbunden.

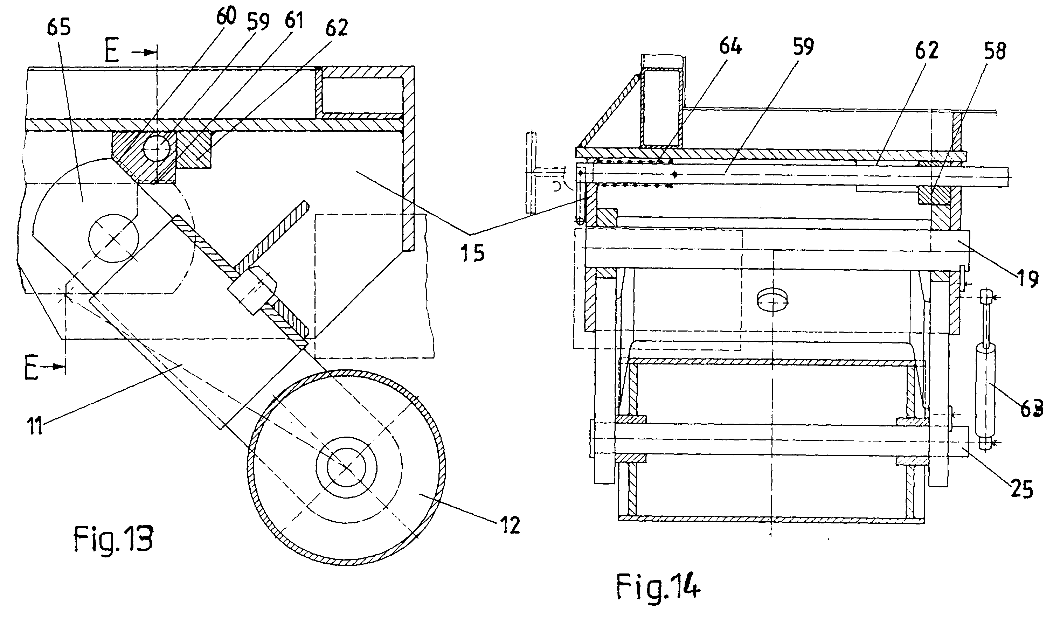

Eine weitere vorteilhafte und kostengünstige Variante für das Ein- und Ausschwenken der Stützrollen 12;13 unter Verwendung einer Gasdruckfeder 63 und eines Sperrstückes 58, das die jeweilige Endlage der Tragarme 11 mit den Stützrollen 12;13 arretiert, ist in Fig. 13 und 14 dargestellt. Diese Lösung zeichnet sich durch einen relativ einfachen konstruktiven Aufbau aus und hat den Vorteil, daß der Schwenkprozeß und das erneute Sichern der Endstellung nach Verstellen des Sperrstückes 58 aus seiner Ruhe- und Sperrstellung sich selbsttätig vollzieht.

Zwischen den Stegblechen 15 ist in einer Führung 62, die mit der Tragarmanordnung fest verschweißt ist, das Sperrstück 58 axial verschiebbar gelagert und mit einer durch die Feder 64 vorgespannten Zugstange 59 verbunden. Das Sperrstück 58 besitz zwei im Winkel zueinander angeordnete Arbeitsflächen 60;61, die in Zusammenwirken mit den Laschen 21 der Tragarme 11 die jeweile Endstellung der Stützrollen 12;13 sicher arretieren. Durch Betätigen der Zugstange 59, die das Sperrstück 58 ständig in Sperr- und Ruhestellung hält, wird der mit einer seiner Stegbleche 15 an einer der Arbeitflächen 60:61 anliegende Tragarm freigegeben und mit Unterstützung durch die Gasdruckfeder 63, die zwischen der Stützrollenachse 25 und dem Bolzen 19 angeordnet ist, verschwenkt. Während der Schwenkbewegung gleitet das Sperrstück 58 auf der Wange 65 der Lasche 21 des Tragarmes 11 entlang und rastet nach Passieren der Arbeitsläche 60:61 durch die Lasche 21 wieder in seine Ruhe- und Sperrstellung ein.

### Bezugszeichenaufstellung

- 1: ISO-Normcontainer
- 2: Containerboden
- 3: Gleitschiene
- 4: Gleitschiene
- 5: vordere Stirnwand
- 6: Aufnahmeträger
- 7: Aufnahmeträger
- 8: Eckbereich
- 9: Eckbereich
- 10: Stirnwand
- 11: Tragarm
- 12: Stützrolle
- 13: Stützrolle
- 14: ISO-Ecke
- 15: Stegblech
- 16: Querspannt
- 17: Querträger
- 18: Stützblech
- 19: Bolzen
- 20: Steckbolzen
- 21: Laschen
- 22: Paßstück
- 23: Paßstück
- 24: Anschlagwinkel
- 25: Stützrollenachse
- 26: Aufnahmebügel
- 27: Traverse
- 28: Achse
- 29: Steckbolzen
- 30: Gabeltasche
- 31: Gabeltasche
- 32: Obergurt
- 33: Untergurt
- 34: Stabilisierungsblech
- 35: Versteifung
- 36: Rahmenprofil
- 37: Führungs- und Versteifungsblech
- 38: Längsträger
- 39: Fuß
- 40: Steg
- 41: Scheibe
- 42: Sicherungssplint
- 43: Lagerzapfen
- 44: Feder lager
- 45: Druckfeder
- 46: starres Federlager
- 47: Zentrierstift
- 48: Sperrhebel
- 49: Aussparung
- 50: Zugfeder
- 51: hydr. Arbeitszylinder
- 52: Aufnahme
- 53: Kolben
- 54: Aufnahmeflansch
- 55: Druckzylinder
- 56: Druckkolben
- 57: Bolzen
- 58: Sperrstück
- 59: Zugstange
- 60: Arbeitsfläche
- 61: Arbeitsfläche
- 62: Führung
- 63: Gasdruckfeder
- 64: Feder
- 65: Wange

## Patentansprüche

1. Großraumtransportbehälter in Form eines stapelbaren ISO-Normcontainers (1) mit einem an einer Stirnwand (5) ortsveränderlich angeordneten Aufnahmebügel (26) für einen Meilerhaken, mit verstellbaren, im Bereich der gegenüberliegenden Stirnwand (10) befindlichen Stützrollen (12;13), die unterhalb des Containerbodens (2) angeordnet sind, und mit zwei voneinander beabstandeten, Gabeltaschen (30;31) bildenden u-förmigen Obergurten, die sich über die gesamte Breite des Containers (1) erstrecken und mit dem Containerboden (2) verschweißt sind, **dadurch gekennzeichnet**, daß unter dem Containerboden (2) Gleitschienen (3;4) angeordnet und mit Aufnahmeträgern (6;7) verbunden, in Eckbereichen (8;9) des Containers (1) die Stützrollen (12;13) so ausschwenkbar angebracht sind, daß sie in eingeschwenkter Stellung innerhalb der ISO-Containernorm und bei ausgeschwenkter Stellung in einer Ebene unterhalb der ISO-Ecken (14) positioniert sind und jede Gabeltasche (30;31) aus einem Obergurt (32), der die Gleitschienen (3;4) und Längsträger (38) durchdringt, und einem Untergurt (33) besteht, wobei zwischen und in den Gleitschienen (3;4) und am Rahmenprofil (36) des Containers (1) Mittel (34;35;37) zur Aussteifung im Bereich der Gabeltaschen (30;31) vorgesehen sind.

2. Großraumtransportbehälter nach Anspruch 1, **dadurch gekennzeichnet**, daß zwischen den Gleitschienen (3;4) Versteifungen (35) angeordnet, die Längsträger (38) zusammen mit den Gleitschienen (3;4) durch Stabilisierungsbleche (34) ausgesteift und Führungs- und Versteifungsbleche (37) zwischen den Ober- und Untergurten (32;33) und dem Rahmenprofil (36) des Containers (1) vorgesehen sind.

3. Großraumtransportbehälter nach Anspruch 2, **dadurch gekennzeichnet**, daß die Versteifungen (35) aus Winkelprofilen bestehen, die zwischen den Längsträgern (38) der Gleitschienen (3;4) eingeschweißt und mit dem Obergurt (32) und dem Containerboden (2) fest verbunden sind.

4. Großraumtransportbehälter nach Anspruch 2, **dadurch gekennzeichnet**, daß die Stabilisierungsbleche (34) die Ober- und Untergurte (32;33) außenseitig umschließen und mit den Längsträgern (38) und mit dem Fuß (39) der Gleitschienen (3;4) fest verbunden sind.

5. Großraumtransportbehälter nach Anspruch 1, **dadurch gekennzeichnet**, daß der Untergurt (33) an der Gleitschiene (3;4) endet und mit dem Obergurt (32) und der Gleitschiene (3;4) fest verbunden ist.

6. Großraumtransportbehälter nach Anspruch 1, **dadurch gekennzeichnet**, daß die Stützrollen (12;13) in Tragarme (11) gelagert und die Tragarme (11) mittels Bolzen (19) an Stegblechen (15), die mit einem an Querspannten (16) und am unteren Querträger (17) der Stirnwand (10) angebrachten Stützblech (18) fest verbunden sind, ausschwenkbar angelenkt und in ein- und ausgeschwenkter Stellung durch Steckbolzen (20) arretiert sind.

7. Großraumtransportbehälter nach Anspruch 1 und 6, **dadurch gekennzeichnet**, daß die Tragarme (11) H-förmig ausgebildet sind und aus Laschen (21) und aus mit den Laschen (21) fest verbundenen Paßstücken (22;23) bestehen, wobei die oberen Paßstücke (23) bei ausgeschwenktem Tragarm (11) an einem Anschlagwinkel (24) spielfrei anliegen und zwischen den freien Enden der Laschen (21) die Stützrollen (12;13) auf einer Stützrollenachse (25) drehbar gelagert sind.

8. Großraumtransportbehälter nach Anspruch 1, **dadurch gekennzeichnet**, daß der Aufnahmebügel (26) für den Meilerhaken zwischen den Aufnahmeträgern (6;7) verschwenk- und höhenverstellbar angeordnet und in eingeschwenkter Stellung innerhalb der ISO-Containernorm positioniert ist.

9. Großraumtransportbehälter nach Anspruch 1 und 8, **dadurch gekennzeichnet**, daß der Aufnahmebügel (26) in einer Traverse (27) angeordnet ist, die zwischen den Aufnahmeträgern (6;7) um eine Achse (28) verschwenkbar gelagert und in der ein- und ausgeschwenkten Position durch Steckbolzen (29) festgelegt ist.

10. Großraumtransportbehälter nach Anspruch 1 und 6, **dadurch gekennzeichnet**, daß an den Tragarmen (11) kraftspeichernde Elemente, die die Stützrollen (12;13) in die jeweilige Ruhe- oder Arbeitsstellung führen, in Kippwerkanordnung angelenkt und an den Stützrollenachsen (25) ortsfest angeschlagen sind, wobei die jeweilige Endstellung der Stützrollen (12;13) durch vorgespannte Sperrhebel (48) fixiert ist.

11. Großraumtransportbehälter nach Anspruch 10, **dadurch gekennzeichnet**, daß das kraftspeichernde Element eine Druckfeder (45) ist.

12. Großraumtransportbehälter nach Anspruch 1, 6 und 10, **dadurch gekennzeichnet**, daß das Stegblech (15) einen Lagerzapfen (43) aufweist, auf den ein Federlager (44) verdrehbar angeordnet und über einen Zentrierstift (47) mit der Stützrollenachse (25) wirkverbunden ist, wobei der Zentrierstift (47) im Federlager (44) lösbar befestigt und in einem Federlager (46) geführt ist und die Druckfeder (45) mit Hilfe des Federlagers (46) an der Stützrollenachse (25) angeschlagen ist.

13. Großraumtransportbehälter nach Anspruch 1 und 6, **dadurch gekennzeichnet**, daß die Arbeitsendstellung der Stützrollen (12;13) durch Bolzen (57), die an den Tragarmen (11) befestigt sind und in Aussparungen (49) eines Anschlagwinkels (24) eingreifen lagebestimmend fixiert ist und der durch eine Zugfeder (50) vorgespannte Sperrhebel (48) die Arbeitsendstellung der Stützrollen (12;13) sichernd den Anschlagwinkel (14) hintergreift.

14. Großraumtransportbehälter nach Anspruch 1 und 6, **dadurch gekennzeichnet**, daß die Endstellungen der Tragarme (11) durch selbstzentrierende Spannexzenter gesichert ist.

15. Großraumtransportbehälter nach Anspruch 1 und 6, **dadurch gekennzeichnet**, daß der Anschlagwinkel (24) ortsfest am Containerrahmen angeordnet ist.

16. Großraumtransportbehälter nach Anspruch 1 und 10, **dadurch gekennzeichnet**, daß das kraftspeichernde Element eine Gasdruckfeder ist.

17. Großraumtransportbehälter nach Anspruch 1 und 10, **dadurch gekennzeichnet**, daß das kraftspeichernde Element ein hydraulischer Arbeitszylinder (51) ist.

18. Großraumtransportbehälter nach Anspruch 17, **dadurch gekennzeichnet**, daß der hydraulischer Arbeitszylinder (51) über eine Aufnahme (52) am Containerboden (2) angeordnet und mit seinem Kolben (53) über einen Aufnahmeflansch (54) an den Tragarmen (11) drehbeweglich angelenkt ist.

19. Großraumtransportbehälter nach Anspruch 1 und 17, **dadurch gekennzeichnet,** daß am Containerboden (2) ein hydaulischer Druckzylinder (55) angebracht ist, dessen Druckkolben (56) mit dem betreffenden Tragarm (11) zusammenwirkt.

20. Großraumtransportbehälter nach Anspruch 17 und 19, **dadurch gekennzeichnet**, daß der Arbeitszylinder (51) und der Druckzylinder (55) an eine, am ISO-Norm-Container vorhandene Hydraulik-Handpumpe angeschlossen sind.

21. Großraumtransportbehälter nach Anspruch 1; 10 und 16, **dadurch gekennzeichnet**, daß die Endstellungen der Tragarme (11) durch ein Sperrstück (58) arretiert sind.

22. Großraumtransportbehälter nach Anspruch 21, **dadurch gekennzeichnet**, daß das Sperrstück (58) in einer Führung (62) zwischen den Stegblechen (15) axial verschiebbar gelagert und über eine durch Federkraft vorgespannte Zugstange (59) in seine Ruhe- und Sperrstellung positioniert ist.

23. Großraumtransportbehälter nach Anspruch 21 und 22, **dadurch gekennzeichnet**, daß das Sperrstück (58) Arbeitsflächen (60;61), die in den jeweiligen Endlagen mit den Laschen (21) der Tragarme (11) zusammenwirken, besitzt.

## Claims

1. Large-capacity transport container in the form of a stackable ISO container (1) with a holding clip (26) for a hook, which holding clip (26) is arranged at an end wall (5) so as to be movable, with adjustable support rollers (12; 13) which are located in the region of the opposite end wall (10) and are arranged below the container bottom (2), and with two U-shaped upper flanges which form fork pockets (30; 31), are arranged at a distance from one another, extend along the entire breadth of the container (1), and are welded with the container bottom (2), characterized in that slide rails (3; 4) are arranged below the container bottom (2) and are connected with holding supports (6; 7), the support rollers (12; 13) are arranged in corner regions (8; 9) ofthe container (1) so as to be swivelable such that they are positioned within the ISO container standard in the swiveled in position and are positioned within a plane below the ISO corners in their swiveled out position, and every fork pocket (30; 31) is formed of an upper flange (32), which penetrates the slide rails (3; 4) and longitudinal support (38), and a lower flange (33), means (34; 35; 37) for stiffening the region of the fork pockets (30; 31) being provided between and in the slide rails (3; 4) and at the frame section (36) of the container (1).

2. Large-capacity transport container according to claim 1, characterized in that stiffeners (35) are arranged between the slide rails (3; 4), the longitudinal supports (38) and slide rails (3; 4) are stiffened by stabilizing plates (34), and guiding and stiffening plates (37) are provided between the upper and lower flanges (32; 33) and the frame section (36) of the container (1).

3. Large-capacity transport container according to claim 2, characterized in that the stiffeners (35) are formed of angle sections which are welded between the longitudinal supports (38) of the slide rails (3; 4) and are securely connected with the upper flange (32) and the container bottom (2).

4. Large-capacity transport container according to claim 2, characterized in that the stabilizing plates (34) enclose the upper and lower flanges (32; 33) externally and are securely connected with the longitudinal supports (38) and with the base (39) of the slide rails (3; 4).

5. Large-capacity transport container according to claim 1, characterized in that the lower flange (33) terminates at the slide rail (3; 4) and is securely connected with the upper flange (32) and with the slide rail (3; 4).

6. Large-capacity transport container according to claim 1, characterized in that the support rollers (12; 13) are supported in support arms (11) and the support arms (11) are articulated in a swivelable manner at web plates (15) by means of pins (19) and are locked in the swiveled in and swiveled out position by insert pins (20), these web plates (15) being securely connected with a support plate (18) which is arranged at transverse ribs (16) and at the lower transverse support (17) of the end wall (10).

7. Large-capacity transport container according to claims 1 and 6, characterized in that the support arms (11) are H-shaped and are formed of brackets (21) and fitting pieces (22; 23 which are securely connected with the brackets (21), wherein the upper fitting piece (23) tightly contacts a stop angle (24) when the support arm (11) is swiveled out, and the support rollers (12; 13) are rotatably supported on a support roller axle (25) between the free ends of the brackets (21).

8. Large-capacity transport container according to claim 1, characterized in that the holding clip (26) for the hook is arranged between the holding supports (6; 7) so as to be swivelable and vertically adjustable and is positioned within the ISO container standard in the swiveled in position.

9. Large-capacity transport container according to claims 1 and 8, characterized in that the holding clip (26) is arranged in a cross-arm (27) which is supported between holding supports (6; 7) so as to be swivelable about an axle (28) and is secured in the swiveled in position and in the swiveled out position by insert pins (29).

10. Large-capacity transport container according to claims 1 and 6, characterized in that energy-storing elements which guide the support rollers (12; 13) into the respective rest position or work position are articulated in a tilting arrangement at the support arms (11) and are fastened in a stationary manner at the support roller axles (25), wherein the respective end position ofthe supporting rollers (12; 13) is locked in by pretensioned locking levers (48).

11. Large-capacity transport container according to claim 10, characterized in that the energy-storing element is a pressure spring (45).

12. Large-capacity transport container according to claims 1, 6 and 10, characterized in that the web plate (15) has a bearing pin (43) on which a spring bearing (44) is arranged so as to be rotatable, this spring bearing (44) having a working connection with the support roller axle (25) via a centering pin (47) which is detachably fitted in the spring bearing (44) and guided in a spring bearing (46), and the pressure spring (45) is fastened at the support roller axle (25) by the spring bearing (46).

13. Large-capacity transport container according to claims 1 and 6, characterized in that the end working position of the support rollers (12; 13) is secured by pins (57) which are fastened at the support arms (11) and engage in recesses (49) of a stop angle (24), and the locking lever (48) which is pretensioned by a tension spring (50) engages behind the stop angle (14) so as to secure the end working position of the support rollers (12; 13).

14. Large-capacity transport container according to claims 1 and 6, characterized in that the end position of the support arms (11) is secured by self-centering clamping cams.

15. Large-capacity transport container according to claims 1 and 6, characterized in that the stop angle (24) is arranged in a stationary manner at the container frame.

16. Large-capacity transport container according to claims 1 and 10, characterized in that the energy-storing element is a pneumatic spring.

17. Large-capacity transport container according to claims 1 and 10, characterized in that the energy-storing element is a hydraulic work cylinder (51).

18. Large-capacity transport container according to claim 17, characterized in that the hydraulic work cylinder (15) is arranged at the container bottom (2) via a holder (52) and is articulated by its piston (53) at the support arms (11) via a holding flange (54) so as to be rotatable.

19. Large-capacity transport container according to claims 1 and 17, characterized in that a hydraulic pressure cylinder (55) is arranged at the container bottom (2), its pressure piston (56) cooperating with the respective support arm (11).

20. Large-capacity transport container according to claims 17 and 19, characterized in that the work cylinder (51) and the pressure cylinder (55) are connected to a hydraulic hand pump which is provided at the ISO container.

21. Large-capacity transport container according to claims 1, 10 and 16, characterized in that the end positions of the support arms (11) are locked by a locking piece (58).

22. Large-capacity transport container according to claim 21, characterized in that the locking piece (58) is supported in a guide (62) between the web plates (15) so as to be displaceable axially and is positioned in its rest position and locking position via a tie rod (59) which is pretensioned by spring force.

23. Large-capacity transport container according to claims 21 and 22, characterized in that the locking piece (58) has work surfaces (60; 61) which cooperate with the brackets (21) of the support arms (11) in the respective end positions.

## Revendications

1. Conteneur de transport de grande capacité sous la forme d'un conteneur de norme ISO (1) susceptible de s'empiler et muni d'un arceau de prise (26) pour un crochet à meules disposé de façon mobile à une paroi d'extrémité (5), muni de rouleaux d'appui (12;13) se trouvant dans le domaine de la paroi d'extrémité opposée (10), susceptibles d'être réglés et disposés en dessous du fond du conteneur (2), et muni de semelles supérieures en forme de U formant deux entrées de fourche (30;31) espacées l'une de l'autre qui s'étirent sur toute la largeur du conteneur (1) et qui sont soudées au fond du conteneur (2), caractérisé par le fait que des glissières (3;4) sont disposées sous le fond du conteneur (2) et sont reliées à des supports de prise (6;7) et que les rouleaux d'appui (12;13) sont placés de façon susceptible à être pivotés en position sortie dans les régions des coins (8;9) du conteneur (1) de telle façon qu'ils sont positionnés, en position pivotée en position rentrée, dans la norme pour conteneurs ISO et, en position pivotée en position sortie, dans un plan situé en dessous des coins ISO (14) et que chaque entrée de fourche (30;31) se compose d'une semelle supérieure (32) pénétrant les glissières (3;4) et les longerons (38) et d'une semelle inférieure (33), des moyens (34;35;37) destinés à renforcer le domaine des entrées de fourche (30;31) étant prévus entre les glissières (3;4) et dans celles-ci et au profil du cadre (36) du conteneur (1).

2. Conteneur de transport de grande capacité selon la revendication 1, caractérisé par le fait que des renforcements (35) sont disposés entre les glissières (3;4), les longerons (38) sont renforcés conjointement avec les glissières (3;4) par des tôles de stabilisation (34) et que des tôles de renforcement et de guidage (37) sont prévues entre les semelles inférieure et supérieure (32;33) et le profil du cadre (36) du conteneur (1).

3. Conteneur de transport de grande capacité selon la revendication 2 , caractérisé par le fait que les renforcements (35) se composent de cornières qui sont soudées entre les longerons (38) des glissières (3;4) et qui sont reliées fixement à la semelle supérieure (32) et au fond du conteneur (2).

4. Conteneur de transport de grande capacité selon la revendication 2, caractérisé par le fait que les tôles de stabilisation (34) entourent extérieurement les semelles inférieure et supérieure (32;33) et sont reliées fixement aux longerons (38) et à la base (39) des glissières (3;4).

5. Conteneur de transport de grande capacité selon la revendication 1, caractérisé par le fait que la semelle inférieure (33) se termine à la glissière (3;4) et est reliée fixement à la semelle supérieure (32) et à la glissière (3;4).

6. Conteneur de transport de grande capacité selon la revendication 1, caractérisé par le fait que les rouleaux d'appui (12;13) sont logés dans des avant-bras (11) et que les avant-bras (11) sont articulés, de façon susceptible à être pivotés en position sortie, au moyen de chevilles métalliques (19) à des âmes (15) reliées fixement à une tôle d'appui (18), placée à des couples transversaux (16) et au support transversal inférieur (17) de la paroi d'extrémité (10), et qui sont arrêtés par des axes débrochables (20) dans une position pivotée en position rentrée et sortie.

7. Conteneur de transport de grande capacité selon les revendications 1 et 6, caractérisé par le fait que les avant-bras (11) sont développés en forme de H et se composent de barres de fixation (21) et de cales d'ajustage (22;23) reliées fixement aux barres de fixation (21), les cales d'ajustage supérieures (23) étant adjacentes sans jeu à une équerre de butée (24) quand l'avant-bras (11) est pivoté en position sortie, et que les rouleaux d'appui (12;13) sont logés de façon susceptible à tourner entre les extrémités libres des barres de fixation (21) sur un axe de rouleau d'appui (25).

8. Conteneur de transport de grande capacité selon la revendication 1, caractérisé par le fait que l'arceau de prise (26) pour le crochet à meules est disposé entre les supports de prise (6;7) de façon susceptible à être réglé en hauteur et à être pivoté et est positionné dans la norme pour conteneurs ISO en position pivotée en position rentrée.

9. Conteneur de transport de grande capacité selon les revendications 1 et 8, caractérisé par le fait que l'arceau de prise (26) est disposé dans une traverse (27) qui est logée de façon susceptible à être pivotée autour d'un axe (28) entre les supports de prise (6;7) et qui est fixée par des axes débrochables (29) en position pivotée en position rentrée et sortie.

10. Conteneur de transport de grande capacité selon les revendications 1 et 6, caractérisé par le fait que des éléments accumulateurs d'énergie entraînant les rouleaux d'appui (12;13) en position respective de repos et de travail sont articulés en disposition de bascule aux avant-bras (11) et sont bloqués aux axes de rouleau d'appui (25), la position finale respective des rouleaux d'appui (12;13) étant fixée par des leviers d'arrêt (48) prétendus.

11. Conteneur de transport de grande capacité selon la revendication 10, caractérisé par le fait que l'élément accumulateur d'énergie est un ressort de pression (45).

12. Conteneur de transport de grande capacité selon les revendications 1, 6 et 10, caractérisé par le fait que l'âme (15) présente un tourillon (43) sur lequel un patin articulé de ressort (44) est disposé de façon susceptible à être tourné et est reliée efficacement à l'axe de rouleau d'appui (25) par l'intermédiaire d'une broche de centrage (47), la broche de centrage (47) étant fixée de façon amovible dans le patin articulé de ressort (44) et menée dans un patin articulé de ressort (46) et le ressort de pression (45) butant à l'axe de rouleau d'appui (25) à l'aide du patin articulé de ressort (46).

13. Conteneur de transport de grande capacité selon les revendications 1 et 6, caractérisé par le fait que la position finale de travail des rouleaux d'appui (12;13) est fixée en déterminant la position par des chevilles métalliques (57) fixées aux avant-bras (11) et mordant dans des encoches (49) d'une équerre de butée (24) et que le levier d'arrêt (48) prétendu par un ressort de traction (50) mord sur l'équerre de butée (14) (n.d.t. :24 et non 14) en assurant la position finale de travail des rouleaux d'appui (12;13).

14. Conteneur de transport de grande capacité selon les revendications 1 et 6, caractérisé par le fait que les positions finales des avant-bras (11) est (n.d.t. :sont et non est) assurée par des mandrins à centrage automatique.

15. Conteneur de transport de grande capacité selon les revendications 1 et 6, caractérisé par le fait que l'équerre de butée (24) est disposée fixement au cadre du conteneur.

16. Conteneur de transport de grande capacité selon les revendications 1 et 10, caractérisé par le fait que l'élément accumulateur d'énergie est un ressort de pression gazeuse.

17. Conteneur de transport de grande capacité selon les revendications 1 et 10, caractérisé par le fait que l'élément accumulateur d'énergie est un cylindre hydraulique de travail (51).

18. Conteneur de transport de grande capacité selon la revendication 17, caractérisé par le fait que le cylindre hydraulique de travail (51) est disposé sur le fond du conteneur (2) par l'intermédiaire d'un logement (52) et qu'il est articulé de façon rotatoire avec son piston (53) aux avant-bras (11) par l'intermédiaire d'un moyeu (54).

19. Conteneur de transport de grande capacité selon les revendications 1 et 17, caractérisé par le fait qu'un cylindre hydraulique de pression (55) dont le piston (56) concourt avec l'avant-bras (11) en question est placé sur le fond du conteneur (2).

20. Conteneur de transport de grande capacité selon la revendication 17, caractérisé par le fait que le cylindre de travail (51) et le cylindre de pression (55) sont raccordés à une pompe à bras hydraulique présente à bord du conteneur de norme ISO.

21. Conteneur de transport de grande capacité selon les revendications 1; 10 et 16, caractérisé par le fait que les positions finales des avant-bras (11) sont arrêtées par une pièce d'arrêt (58).

22. Conteneur de transport de grande capacité selon la revendication 21, caractérisé par le fait que la pièce d'arrêt (58) est logé dans un guidage (62) entre les âmes (15) de façon susceptible à être déplacée axialement et est positionnée dans sa position de repos et d'arrêt par l'intermédiaire d'une tige de traction (59) prétendue par élasticité.

23. Conteneur de transport de grande capacité selon la revendication 21, caractérisé par le fait que la pièce d'arrêt (58) possède des surfaces travaillantes (60;61) qui concourent avec les barres de fixation (21) des avant-bras (11) en fin de course respectivement.
